# EUROPEAN PATENT APPLICATION

(11) **EP 2 230 737 A1**
(43) Date of publication of application: **22.09.2010**
(21) Application number: 10001859.7
(22) Date of filing: 23.02.2010
(51) Int. Cl.: H02G 3/04, C09J 7/04

(54) **Wiring harness, use of a protective tape and method of forming a wiring harness**

(30) Priority: 19.03.2009 JP 2009068713
(71) Applicant: Sumitomo Wiring Systems, Ltd., Yokkaichi-city, Mie 510-8503 (JP)
(72) Inventor: Doi, Masayuki, Yokkaichi.City Mie 510-8503 (JP); Morii, Toshitsugu, Yokkaichi.City Mie 510-8503 (JP); Imatoku, Arisa, Yokkaichi.City Mie 510-8503 (JP)
(74) Representative: Müller-Boré & Partner Patentanwälte

(57) **Abstract**

An object of the present invention is to provide a wiring harness provided with a protective member capable of realizing a cost reduction and space saving while fulfilling a function of protecting a cable bundle.

A protective tape 20 is composed of a three-layer base material 21 formed by bonding two knitted fabrics 22 by a glue 23 applied in dots, and an adhesive layer 24 formed on the underside of the base material 21. Since the base material 21 has a three-layer structure, a load is mainly distributed in the two knitted fabrics 22 to relax a stress in the case of receiving the load from outside, whereby the protective tape 20 is difficult to abrade, i.e. has good abrasion resistance, and also has a good hand cutting property. The protective tape 20 is spirally wound around the outer circumferential surface of a cable bundle 10 with lateral edges thereof overlapped while being dispensed from a roll 30, and the adhesive layer 24 on the underside is bonded to the outer circumferential surface of the cable bundle 10.

## Description

The present invention relates to a wiring harness provided with a protective member, to a use of a tape for a wiring harness and to a method of forming or producing a wiring harness.

The use of a corrugated tube as a protective member is known as a measure for protecting a cable bundle constituting a wiring harness to be installed in an automotive vehicle or the like (see Japanese Unexamined Patent Publication No. 2000-353432). A specific mounting structure is such that, after cables are bundled into a cable bundle by winding a tape (inner taping), the cable bundle is accommodated into a corrugated tube while a slit formed in a longitudinal direction is being opened and a tape is wound around the outer circumferential surface of the corrugated tube (outer taping) to prevent the slit from being opened.

In the case of using the corrugated tube as the protective member, an inner taping operation of winding the tape around the cable bundle, an operation of accommodating the cable bundle into the corrugated tube and an outer taping operation of winding the tape to prevent the opening of the corrugated tube are necessary. Many operation steps and many parts to be assembled have caused a cost increase.

Further, in the case of using the corrugated tube, an accommodation rate of the cable bundle in the corrugated tube is suppressed, for example, to 80 % to suppress the opening of the corrugated tube when the wiring harness is bent or on another occasion, which has made the wiring harness bulky to hinder space saving.

The present invention was developed in view of the above situation and an object thereof is to allow providing a wiring harness provided with a protective member capable of realizing a cost reduction and space saving while fulfilling a function of protecting a cable bundle.

This object is solved according to the invention by the features of the independent claims. Preferred embodiments of the invention are subject of the dependent claims.

The present invention is directed to a wiring harness, wherein a protective tape having an adhesive layer formed on the underside of a laminated base material formed by bonding two fabrics made of knitted fabric(s) and/or woven fabric(s) by a glue and/or adhesive is at least partly wound around a cable bundle.

Since the base material has a three-layer structure by bonding the two fabrics by the glue and/or adhesive, a load is mainly distributed in the two fabrics to relax a stress in the case of receiving the load from outside, whereby the protective tape can be said to be difficult to abrade, i.e. have good abrasion resistance. By having the above three-layer structure, the protective tape can be easily cut by hand, i.e. have a good hand cutting property.

By winding such a protective tape having good abrasion resistance, a function of protecting the cable bundle can be sufficiently fulfilled.

Since the protective tape can be mounted only by being at least partly wound around the outer circumferential surface of the cable bundle and has a good hand cutting property, it can be easily cut by hand, with the result that an operation of mounting the protective tape can be efficiently performed. In other words, a time required for a protective member mounting operation can be shortened and the number of parts can be reduced, wherefore production cost can be drastically reduced.

Since the so-called tape is merely wound, an increase in the diameter of the wiring harness is suppressed to a minimum level, which contributes to space saving and simultaneously realizes weight saving.

The prevent invention may have the following constructions.
(1) The glue or adhesive for bonding the two fabrics in the protective tape may be applied in dots or in a discontinuous manner.
   Since the glue or adhesive is applied in dots to bond the two fabrics and a clearance is formed between the two fabrics, a load distribution function of the fabrics is better fulfilled. Further, the protective tape comes to have a good sound deadening property, and the generation of noise is suppressed when the wiring harness comes into contact with or is rubbed against a surrounding device or the like due to vibration or the like. Further, the protective tape has good flexibility and can be more closely wound around the outer circumferential surface of the cable bundle even if the outer circumferential surface of the cable bundle is uneven or the cable bundle is bent.
(2) The protective tape may be substantially spirally wound at least partly around the outer circumferential surface of the cable bundle with lateral edges thereof overlapped.
(3) The protective tape may be wound at least partly around the outer circumferential surface of the cable bundle into a cylindrical shape with opposite lateral edges thereof overlapped.
(4) The protective tape may be wound at least partly around the outer circumferential surface of the cable bundle into a cylindrical shape with the inner surfaces of opposite lateral edges thereof put together.
(5) A thickness of the fabric on the top side and/or a thickness of the fabric on the under side are below about 1.0 mm, a thickness of the glue and/or adhesive may be about 0.05 to about 1.0 mm and/or a thickness of an adhesive layer is about 0.05 to about 1.0 mm,
wherein the total thickness may be equal to or below about 2.0 mm.

According to a further aspect of the invention, there is further provided a use of a protective tape to be at least partly wound around a cable bundle of a wiring harness, wherein the protective tape has an adhesive layer formed on the underside of a laminated base material formed by bonding two fabrics made of knitted fabric(s) and/or woven fabric(s) by a glue and/or adhesive.

The prevent invention may have the following constructions.
(1) The glue or adhesive for bonding the two fabrics in the protective tape may be applied in dots or in a discontinuous manner.
(2) A thickness of the fabric on the top side and/or a thickness of the fabric on the under side are below about 1.0 mm, a thickness of the glue and/or adhesive is about 0.05 to about 1.0 mm and/or a thickness of an adhesive layer may be about 0.05 to about 1.0 mm,
wherein the total thickness preferably may be equal to or below about 2.0 mm.

According to a further aspect of the invention, there is further provided a method of forming a wiring harness, in particular according to the above invention or a preferred embodiment thereof, comprising the following steps:
providing a cable bundle
providing a protective tape having an adhesive layer formed on the underside of a laminated base material formed by bonding two fabrics made of knitted fabric(s) and/or woven fabric(s) by a glue and/or adhesive, and
at least partly wing the protective tape around the cable bundle.

The prevent invention may have the following constructions.
(1) The glue or adhesive for bonding the two fabrics in the protective tape may be applied in dots or in a discontinuous manner.
(2) The protective tape may be substantially spirally wound around at least part of the outer circumferential surface of the cable bundle with lateral edges thereof overlapped.
(3) The the protective tape may be wound around at least part of the outer circumferential surface of the cable bundle into a cylindrical shape with opposite lateral edges thereof overlapped.
(4) The protective tape may be wound around at least part of the outer circumferential surface of the cable bundle into a cylindrical shape with the inner surfaces of opposite lateral edges thereof put together.
(5) A thickness of the fabric on the top side and/or a thickness of the fabric on the under side are below about 1.0 mm, a thickness of the glue and/or adhesive is about 0.05 to about 1.0 mm and/or a thickness of an adhesive layer may be about 0.05 to about 1.0 mm,
wherein the total thickness preferably may be equal to or below about 2.0 mm.

According to the above, there can be obtained a wiring harness provided with a protective member capable of realizing a cost reduction and space saving while fulfilling a function of protecting a cable bundle.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a section of a protection tape according to a first embodiment of the invention,
FIG. 2 is a perspective view of a roll of the protective tape,
FIG. 3 is a side view showing a mode for winding the protective tape around a cable bundle,
FIG. 4 is a schematic diagram of an abrasion resistance tester,
FIG. 5 is a graph showing a result of the test of FIG. 4,
FIG. 6 is a schematic diagram of a sound deadening tester relating to hitting sound,
FIG. 7 is a graph showing a result of the test of FIG. 6,
FIG. 8 is a schematic diagram of a sound deadening tester relating to friction sound,
FIG. 9 is a graph showing a result of the test of FIG. 8,
FIG. 10 is a perspective view showing a mode for winding a protective tape around a cable bundle according to a second embodiment, and
FIG. 11 is a perspective view showing a mode for winding a protective tape around a cable bundle according to a third embodiment.

Hereinafter, embodiments of the present invention are described with reference to the accompanying drawings.

### <First Embodiment>

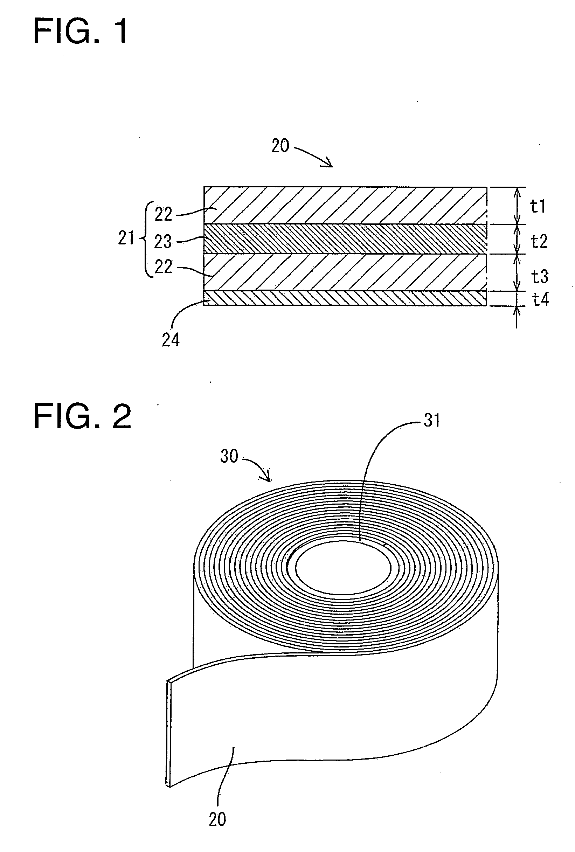

A first preferred embodiment of the present invention is described with reference to FIGS. 1 to 9. The first embodiment roughly has such a structure that a protective tape 20 as a protective member is wound around a cable bundle 10 forming part of a wiring harness.

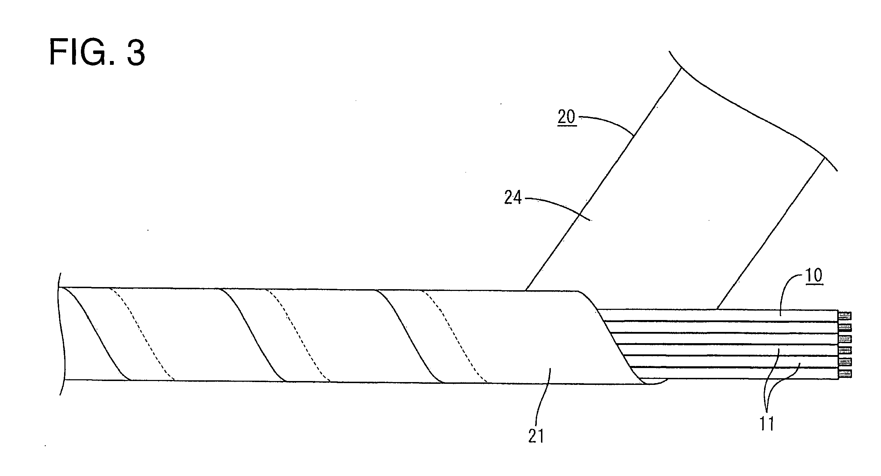

The cable bundle 10 is such that a plurality of insulated cables 11 and/or shielded cables are bundled as shown in FIG. 3.

As shown in FIG. 1, the protective tape 20 comprises or is composed of a base material 21 and an adhesive layer 24 formed on the underside of the base material 21 to be held in contact with the outer circumferential surface of the cable bundle 10.

The base material 21 has a three-layer structure formed by bonding two knitted fabrics 22 by a glue or adhesive 23. Here, the "knitted fabric" is such that either warps or wefts are continuous strings of loops and the others are inserted through these loops. On the contrary, a "woven fabric" is a fabric formed by vertically or orthogonally intersecting warps and wefts.

Particularly, a polyamide glue is illustrated as the glue 23 and preferably applied in dots (in points) or on discontinuous areas having a small extension (such as not greater than about 4 mm2) between the two knitted fabrics 22. The glue 23 may be applied in a substantially regular pattern such as a lattice.

An acrylic adhesive or a rubber adhesive can be cited as examples of the glue forming the adhesive layer 24.

The thicknesses of the respective layers are set such that the thickness t1 of the knitted fabric 22 on the top side and that t3 of the knitted fabric 22 on the under side are below about 1.0 mm, thickness t2 of the glue 23 is about 0.05 to about 1.0 mm and thickness t4 of the adhesive layer 24 is about 0.05 to about 1.0 mm and the total thickness is equal to or below about 2.0 mm. In this embodiment, the total thickness is set at 1.0 mm.

The width of the protective tape 20 is set below about 100 mm and, for example, selected to be 25 mm.

The protective tape 20 having such width (25 mm) and thickness (1.0 mm) is prepared in the form of a so-called roll 30 by being wound around a core element such as a paper core tube 31 as shown in FIG. 2.

Upon protecting the cable bundle 10 constituting a part of the wiring harness, the protective tape 20 at least partly is (preferably manually) wound around this cable bundle 10. In this embodiment, the protective tape 20 is spirally wound around the outer circumferential surface of the cable bundle with lateral ends or portions thereof overlapped while being dispensed from the roll 30 (as a preferred core element) as shown in FIG. 3, and the adhesive layer 24 on the underside substantially is bonded to the outer circumferential surface of the cable bundle 10. For example, about 1/4 of the entire width is overlapped (1/4 overlap) or about half the entire width is overlapped (half overlap).

After the protective tape 20 is wound around over a specified (predetermined or predeterminable) area of the cable bundle 10, the protective tape 20 needs to be cut or separated. Here, since the base material 21 of the protective tape 20 is mainly composed of the knitted fabrics 22, the protective tape 20 can be easily cut or separated by hand, i.e. has a good hand cutting property.

Evaluation as to whether or not the protective tape 20 wound as above is valid as the protective member for the cable bundle 10 substantially means evaluation on the abrasion resistance of the protective tape 20 itself. Here, the protective tape 20 of this embodiment can be said to have good abrasion resistance if a hole is made to such an extent that the cable bundle 10 inside is exposed to the outside when the protective tape 20 is subjected to an external load.

The protective tape 20 is thought to be difficult to abrade since the base material 21 of the protective tape 20 has the three-layer structure by bonding the two knitted fabrics 22 by the glue 23 and a load is mainly distributed in the two knitted fabrics 22, i.e. a stress is relaxed, in the case of receiving the load from outside. Further, since the glue 23 preferably is applied in dots and a clearance is formed between the two knitted fabrics 22, a load distribution function of the knitted fabrics 22 is better fulfilled.

The following result was obtained upon conducting a test on the abrasion resistance of the protective tape 20 according to this embodiment.

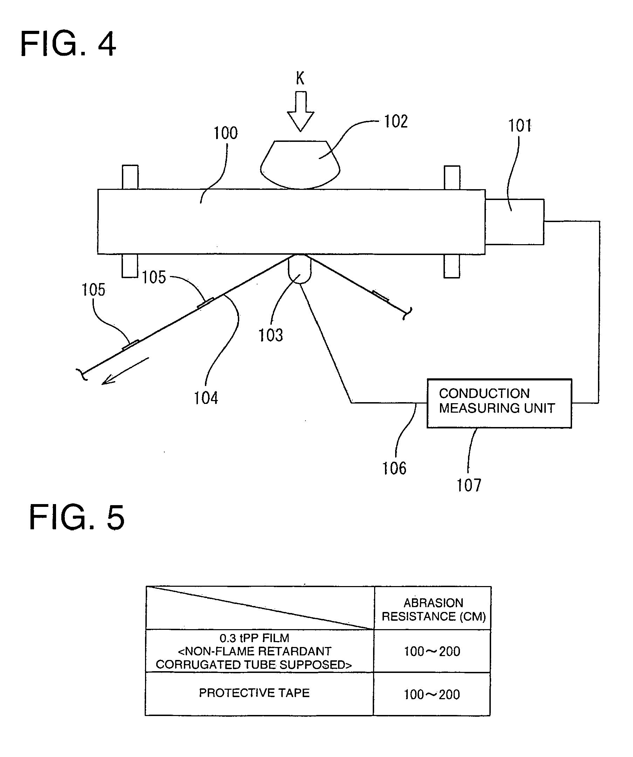

Upon the test, an abrasion resistance tester (for automotive low-voltage cables) specified by JIS was used as shown in FIG. 4. In this tester, a sample 100 is sandwiched between a pair of upper and lower metallic sandwiching portions 102, 103 while being wound around and boned to the outer circumferential surface of a conductor 101 made of an aluminum tube, and an endless abrasive tape (JIS R6251 based article) is arranged to be able to travel between the lower sandwiching portion 103 and the sample 100. Conductive portions 105 are provided at specified intervals (150 mm) on the abrasive tape 104, the lower sandwiching portion 103 and the conductor 101 are connected by a conductive line 106 and a conduction measuring unit 107 is provided at an intermediate position of the conductive line 106.

With a load K (45 gf) exerted to the upper sandwiching portion 102, the abrasive tape 104 is caused to travel at a specified speed (1500 mm/min). As the abrasive tape 104 travels, the sample 100 is gradually abraded to eventually have a hole made therein. Then, one conductive portion 105 of the abrasive tape 104 comes into contact with the conductor 101 via the hole and a current flows in the conduction line 106. When this is detected by the conduction measuring unit 107, the abrasive tape 104 is stopped.

In short, the travel of the abrasive tape 104 stops when the hole is made in the sample 100 after the travel is started. Thus, as the traveling time of the abrasive tape 104 becomes longer, i.e. as the traveling distance becomes longer, more difficulty to make a hole in the sample 100, i.e. better abrasion resistance can be evaluated.

Upon testing the protective tape 20 of this embodiment, the traveling distance of the abrasive tape 104 indicating abrasion resistance was confirmed to have reached 100 to 200 mm as shown in FIG. 5.

On the other hand, upon conducting the same test using a PP (polypropylene) film having a thickness of 3 mm supposing a non-flame retardant corrugated tube used as a conventional protective member, a numerical value relating to abrasion resistance was confirmed to be 100 to 200 mm.

In other words, the test result was obtained which indicated that the protective tape 20 of this embodiment had good abrasion resistance similar to the corrugated tube as a proven protective member for a wiring harness.

The protective tape 20 of this embodiment has a good sound deadening property since it has the three-layer structure by bonding the two knitted fabrics 22 by the glue 23 and the glue 23 preferably is applied in dots to form the clearance between the two knitted fabrics 22.

For the evaluation of the sound deadening property, two tests, i.e. a test relating to hitting sound and a test relating to friction sound were conducted.

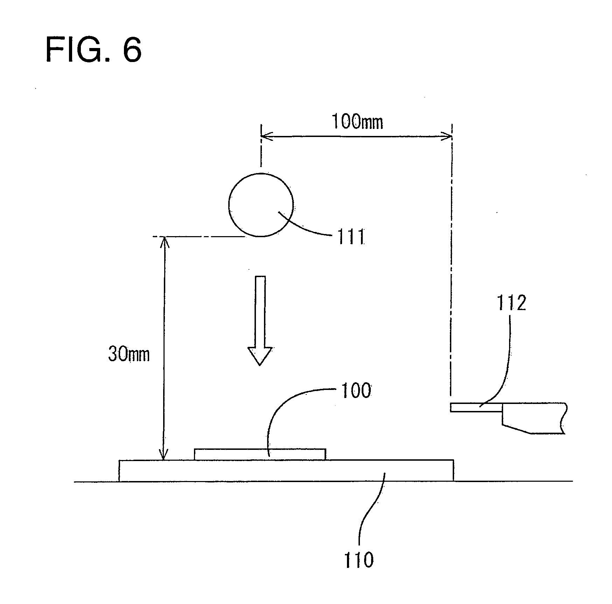

The test relating to hitting sound was such that a sample 100 was placed on a test plate 110 made of a stainless steel plate (can also be a PP (polypropylene) plate or a PE (polyethylene) plate) having a thickness of 2 mm, an iron ball of 100 g was freely fallen on the sample 100 from a position at a height of 30 mm, hitting sound generated at that time was measured by a measuring unit 112 arranged at a position which is slightly above the test plate 110 and at a horizontal distance of 100 mm from the fallen position of the iron ball 111 as shown in FIG. 6.

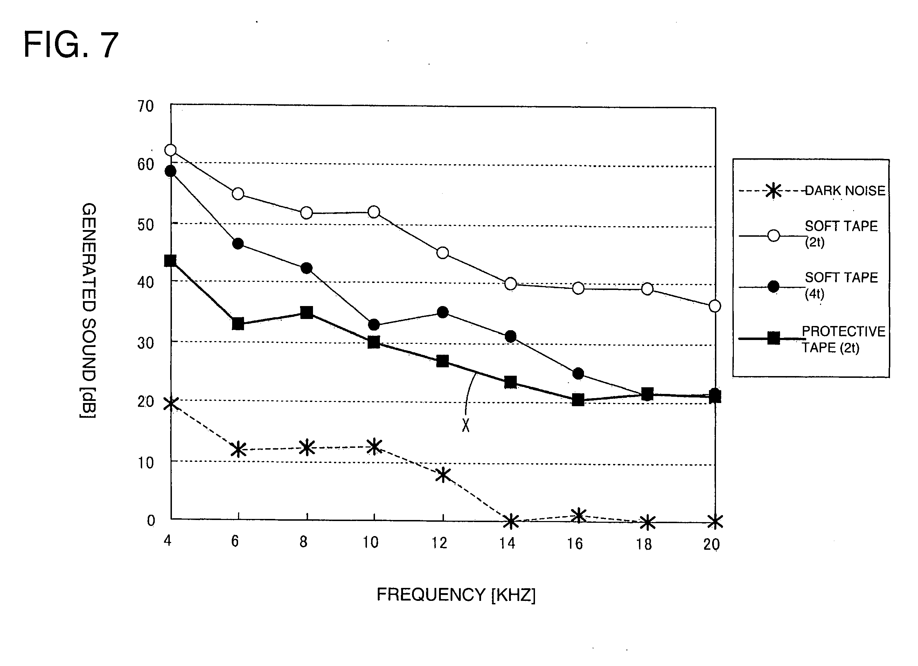

A test result of the protective tape 20 of this embodiment is as shown by a characteristic line X of a graph of FIG. 7 and the hitting sound is 40 dB or below in an audible region (6 to 20 kHz). This indicates a sound deadening property equal to or better than that of a soft tape (urethane foam tape) having a thickness of 4 mm proven to have a good sound deadening property against hitting sound.

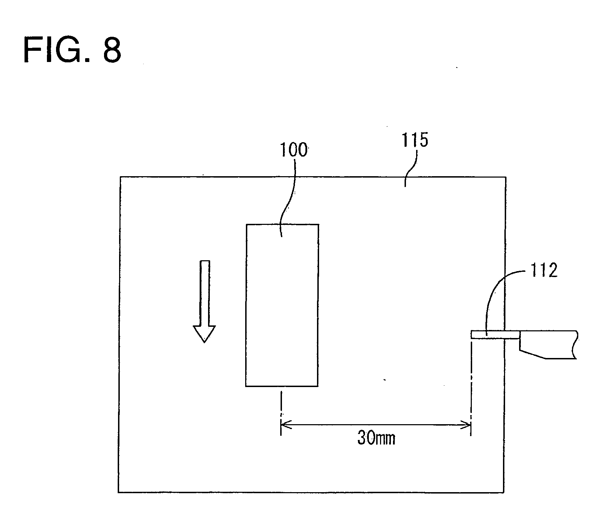

The test relating to friction sound was such that the sample 100 was manually slid in an arrow direction at a speed of about 20 mm/sec at a specified position on a test plate 115 made of a stainless steel plate (can also be a PP (polypropylene) plate or a PE (polyethylene) plate) having a thickness of 2 mm, and friction sound generated at that time was measured by the measuring unit 112 arranged at a position which is slightly above the test plate 115 and at a horizontal distance of 30 mm from the sliding position of the sample 100 as shown in FIG. 8.

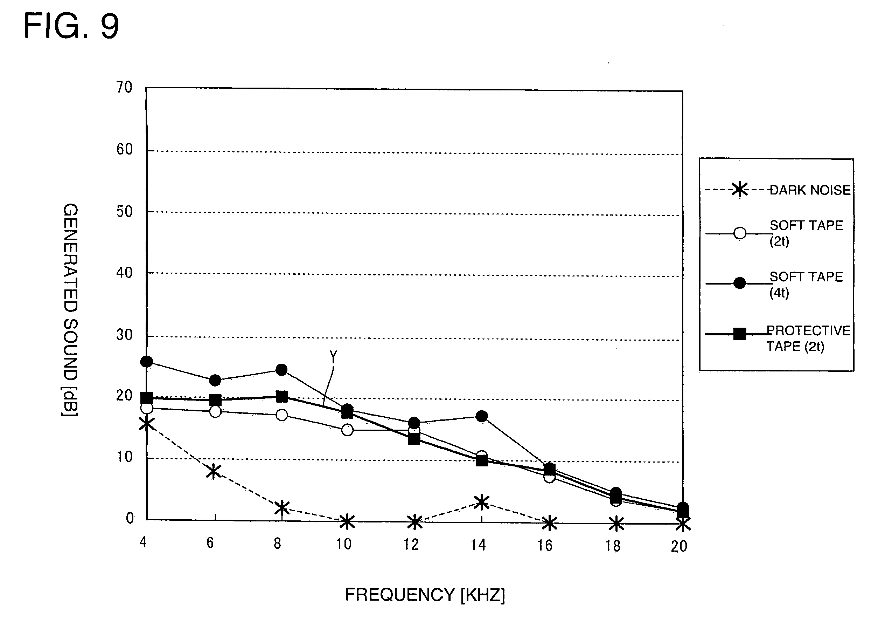

A test result of the protective tape 20 of this embodiment is as shown by a characteristic line Y of a graph of FIG. 9 and the friction sound is 20 dB or below in the audible region (6 to 20 kHz). This indicates a sound deadening property equal to or better than that of soft tapes (urethane foam tapes) having thicknesses of 2 mm and 4 mm proven to have a good sound deadening property against friction sound.

The above two sound deadening tests confirmed that the protective tape 20 of this embodiment had a good sound deadening property against both hitting sound and friction sound.

The protective tape 20 of this embodiment has good flexibility since the base material 21 of the protective tape 20 has the three-layer structure as described above and the glue 23 preferably is applied in dots to form the clearance between the two knitted fabrics 22. Thus, even if the outer circumferential surface of the cable bundle 10 is uneven or the cable bundle 10 is bent, the protective tape 20 can be closely wound around the outer circumferential surface of the cable bundle 10.

The wiring harness formed by winding the protective tape 20 according to this embodiment around the cable bundle 10 as described above can obtain the following numerous advantages.

First of all, since the protective tape 20 itself has abrasion resistance equivalent to that of the corrugated tube proven to be the protective member for the cable bundle 10, it can sufficiently fulfill its function of protecting the cable bundle 10.

In addition, the protective tape 20 can be mounted only by being substantially spirally wound at least partly around the outer circumferential surface of the cable bundle 10 with the lateral edges or portions thereof overlapped while being dispensed from the roll 30. Further, since having a good hand cutting property, the protective tape 20 can be easily cut by hand also when it is cut after being wound in a specific manner. As a result, an operation of mounting the protective tape 20 as the protective member can be efficiently performed.

Since the protective tape 20 preferably having a thickness of about 1.0 mm is only wound, an increase in the diameter of the wiring harness can be suppressed to a minimum level, which contributes to space saving. Weight saving can also be simultaneously realized.

Further, since the protective tape 20 has a good sound deadening property, the generation of noise can be suppressed when the wiring harness comes into contact with or is rubbed against a surrounding device or the like due to vibration or the like.

Furthermore, since having good flexibility, the protective tape 20 can be more closely wound around the outer circumferential surface of the cable bundle 10 even if the outer circumferential surface of the cable bundle 10 is uneven or the cable bundle 10 is bent.

Accordingly, to provide a wiring harness provided with a protective member capable of realizing a cost reduction and space saving while fulfilling a function of protecting a cable bundle, a protective tape 20 is composed of or comprises a three-layer base material 21 formed by bonding two knitted fabrics 22 by a glue 23 (preferably applied in dots) such that the fabrics 22 are separated from each other to form the clearance preferably having a thickness of about 0.05 to about 1.0 mm (substantially corresponding to the thickness t2 of the glue 23), and an adhesive layer 24 formed on the underside of the base material 21. Since the base material 21 has a three-layer structure, a load is mainly distributed in the two knitted fabrics 22 to relax a stress in the case of receiving the load from outside, whereby the protective tape 20 is difficult to abrade, i.e. has good abrasion resistance, and also has a good hand cutting property. The protective tape 20 is to be substantially spirally wound around the outer circumferential surface of at least part of a cable bundle 10 with lateral edges or portions thereof overlapped while preferably being dispensed from a roll 30, and the adhesive layer 24 on the underside is bonded to the outer circumferential surface of the cable bundle 10.

### <Second Embodiment>

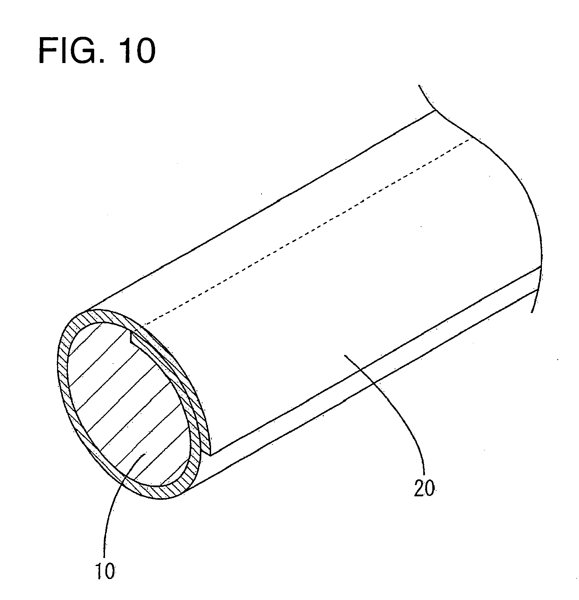

FIG. 10 shows a second preferred embodiment of the present invention showing another mode for winding the protective tape 20.

In the second embodiment, the protective tape 20 is wound around the outer circumferential surface of the cable bundle 10 into a cylindrical shape with the opposite lateral edges or portions thereof overlapped.

More specifically, the protective tape 20 is so placed as to substantially extend in a lengthwise direction of the cable bundle 10 while being dispensed from the roll 30 (see FIG. 2), and is hand-cut after extending over a specified (predetermined or predeterminable) region. Thereafter, the protective tape 20 is so wound into a cylindrical form as overlap the opposite lateral edges or portions thereof preferably by about 1/4 of the entire width, and the adhesive layer 24 on the underside is bonded to the outer circumferential surface of the cable bundle 10.

Effects similar to the first embodiment can be obtained also for a wiring harness wound with the protective tape 20 in the mode according to the second embodiment.

### <Third Embodiment>

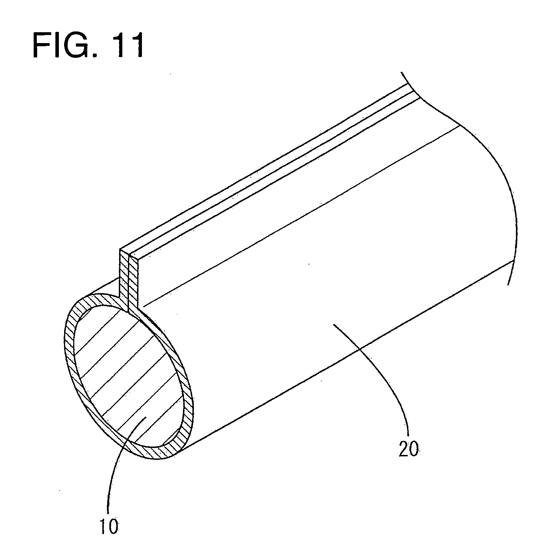

FIG. 11 shows a third preferred embodiment of the present invention showing still another mode for winding the protective tape 20.

In the third embodiment, the protective tape 20 is wound around the outer circumferential surface of the cable bundle 10 substantially into a cylindrical shape with the inner surfaces of the opposite lateral edges or portions thereof put or joined together.

More specifically, the protective tape 20 is so placed as to substantially extend in the lengthwise direction of the cable bundle 10 while being dispensed from the roll 30 (see FIG. 2), and is hand-cut after extending over a specified (predetermined or predeterminable) region. Thereafter, the protective tape 20 is wound with the inner surfaces of the opposite lateral edges thereof put or joined together or contacted, and the adhesive layer 24 on the underside is bonded to the outer circumferential surface of the cable bundle 10. A dimension of a part where the inner surfaces of the opposite lateral edges are put together (particularly by applying the respective adhesives layers 24 to each other) preferably is about 1/4 of the entire width of the protective tape 20.

Effects similar to the first embodiment can be obtained also for a wiring harness wound with the protective tape 20 in the mode according to the third embodiment.

### <Other Embodiments>

The present invention is not limited to the above described and illustrated embodiments. For example, the following embodiments are also included in the technical scope of the present invention.
(1) Although the two fabrics constituting the base material of the protective tape are both knitted fabrics in the above embodiments, a knitted fabric and a woven fabric may be combined or two fabrics may be both woven fabrics.
(2) If the glue for bonding the two fabrics has, for example, a relatively low hardness, it may be applied over the entire surface.
(3) An adhesive may be used instead of the glue to bond the two fabrics. A preferable adhesive is an acrylic adhesive or a rubber adhesive.

### LIST OF REFERENCE NUMERALS

- 10: cable bundle
- 20: protective tape
- 21: base material
- 22: knitted fabric (fabric)
- 23: glue
- 24: adhesive layer
- 30: roll

## Claims

1. A wiring harness, wherein a protective tape (20) having an adhesive layer (24) formed on the underside of a laminated base material formed by bonding two fabrics (22) made of knitted fabric(s) and/or woven fabric(s) by a glue and/or adhesive (23) is at least partly wound around a cable bundle (10).

2. A wiring harness according to claim 1, wherein the glue or adhesive (23) for bonding the two fabrics in the protective tape is applied in dots.

3. A wiring harness according to claim 1 or 2, wherein the protective tape (20) is substantially spirally wound around at least part of the outer circumferential surface of the cable bundle (20) with lateral edges thereof overlapped.

4. A wiring harness according to claim 1 or 2, wherein the protective tape (20) is wound around at least part of the outer circumferential surface of the cable bundle (10) into a cylindrical shape with opposite lateral edges thereof overlapped.

5. A wiring harness according to claim 1 or 2, wherein the protective tape (20) is wound around at least part of the outer circumferential surface of the cable bundle (10) into a cylindrical shape with the inner surfaces of opposite lateral edges thereof put together.

6. A wiring harness according to any one of the preceding claims, wherein a thickness (t1) of the fabric (22) on the top side and/or a thickness (t3) of the fabric (22) on the under side are below about 1.0 mm, a thickness (t2) of the glue and/or adhesive (23) is about 0.05 to about 1.0 mm and/or a thickness (t4) of an adhesive layer (24) is about 0.05 to about 1.0 mm,
wherein the total thickness preferably is equal to or below about 2.0 mm.

7. Use of a protective tape (20) to be at least partly wound around a cable bundle (10) of a wiring harness, wherein the protective tape (20) has an adhesive layer (24) formed on the underside of a laminated base material formed by bonding two fabrics (22) made of knitted fabric(s) and/or woven fabric(s) by a glue and/or adhesive (23).

8. Use according to claim 7, wherein the glue or adhesive (23) for bonding the two fabrics in the protective tape is applied in dots.

9. Use according to claim 7 or 8, wherein a thickness (t1) of the fabric (22) on the top side and/or a thickness (t3) of the fabric (22) on the under side are below about 1.0 mm, a thickness (t2) of the glue and/or adhesive (23) is about 0.05 to about 1.0 mm and/or a thickness (t4) of an adhesive layer (24) is about 0.05 to about 1.0 mm,
wherein the total thickness preferably is equal to or below about 2.0 mm.

10. A method of forming a wiring harness, comprising the following steps:
providing a cable bundle (10)
providing a protective tape (20) having an adhesive layer (24) formed on the underside of a laminated base material formed by bonding two fabrics (22) made of knitted fabric(s) and/or woven fabric(s) by a glue and/or adhesive (23), and
at least partly wing the protective tape (20) around the cable bundle (10).

11. A method according to claim 10, wherein the glue or adhesive (23) for bonding the two fabrics in the protective tape is applied in dots.

12. A method according to claim 9 or 10, wherein the protective tape (20) is substantially spirally wound around at least part of the outer circumferential surface of the cable bundle (20) with lateral edges thereof overlapped.

13. A method according to claim 9 or 10, wherein the protective tape (20) is wound around at least part of the outer circumferential surface of the cable bundle (10) into a cylindrical shape with opposite lateral edges thereof overlapped.

14. A method according to claim 9 or 10, wherein the protective tape (20) is wound around at least part of the outer circumferential surface of the cable bundle (10) into a cylindrical shape with the inner surfaces of opposite lateral edges thereof put together.

15. A wiring harness according to any one of the preceding claims 9 to 14, wherein a thickness (t1) of the fabric (22) on the top side and/or a thickness (t3) of the fabric (22) on the under side are below about 1.0 mm, a thickness (t2) of the glue and/or adhesive (23) is about 0.05 to about 1.0 mm and/or a thickness (t4) of an adhesive layer (24) is about 0.05 to about 1.0 mm,
wherein the total thickness preferably is equal to or below about 2.0 mm.
